# EUROPÄISCHE PATENTANMELDUNG

(11) **EP 2 946 917 A1**
(43) Veröffentlichungstag der Anmeldung: **25.11.2015**
(21) Anmeldenummer: 15168112.9
(22) Anmeldetag: 19.05.2015
(51) Int. Cl.: B30B 11/02, B30B 15/00

(54) **PULVERPRESSE**

(30) Priorität: 20.05.2014 DE 102014107127
(71) Anmelder: Fette Compacting GmbH, 21493 Schwarzenbek (DE)
(72) Erfinder: Groth, Andreas, 21493 Schwarzenbek (DE); Teetzen, Andreas, 21493 Schwarzenbek (DE); Behns, Holger, 21465 Reinbek (DE)
(74) Vertreter: Hauck Patentanwaltspartnerschaft mbB

(57) **Zusammenfassung**

Pulverpresse mit einer Matrizenplatte, die mindestens eine Matrize trägt, mindestens einem oberen Presswerkzeug an einem oberen Werkzeugträger, mindestens einem unteren Presswerkzeug an einem unteren Werkzeugträger, mindestens einem oberen Linearantrieb für eine obere Pressachse, der auf den oberen Werkzeugträger wirkt, mindestens einem unteren Linearantrieb für die untere Pressachse, der auf einen unteren Werkzeugträger oder auf die Matrizenplatte wirkt, ggf. einen weiteren Linearantrieb für eine Querachse und einer Kraftmesseinrichtung, die Messkräfte zumindest an der oberen und/oder unteren Pressachse und/oder an der Querachse misst, wobei die obere Pressachse und/oder die untere Pressachse mindestens zwei exzentrisch am oberen und/oder unteren Werkzeugträger (28, 30) angreifende Linearantriebe (40, 42, 54) bzw. (41, 44, 46) bzw. (46, 50, 60) bzw. (48, 52, 61) aufweist, die parallel beabstandete Linearantriebe gemeinsam auf ein Kraftübertragungsglied (58) wirken und das Kraftübertragungsglied über beabstandete Piezosensoren (66, 68) auf den Werkzeugträger (28) wirkt.

## Beschreibung

Die Erfindung bezieht sich auf eine Pulverpresse nach Patentanspruch 1.

Eine übliche Pulverpresse, z.B. für Metall- oder Keramikpulver, weist eine Matrizenplatte auf, die mindestens eine Matrize trägt. Der Matrize zugeordnet ist mindestens ein oberes und/oder ein unteres Presswerkzeug, wobei die Presswerkzeuge an einem Werkzeugträger gehalten sind. Der obere Werkzeugträger, der untere Werkzeugträger oder die Matrizenplatte werden von mindestens einem Linearantrieb betätigt, damit die Presswerkzeuge, etwa Pressstempel, in die mit Pulver gefüllte Matrize eingeführt werden bzw. aus diesen heraus bzw. um den fertigen Pressling aus der Matrize auszustoßen. Der Werkzeugträger bzw. die Matrizenplatte, soweit diese vertikal bewegbar sind, sind in einem Pressengestell geführt. Als Linearantriebe kommen Hydraulikzylinder oder elektrische Antriebe in Frage. Bei letzteren wird ein Spindeltrieb verwendet, dessen Spindel mit der Welle eines Elektromotors und dessen Spindelmutter mit dem Werkzeugträger zusammenwirkt.

Für die Überwachung des Pressprozesses ist erwünscht, die Presskräfte zu messen. Es ist bekannt, die Presskräfte indirekt zu messen, beispielsweise über den Druck im Hydraulikzylinder oder bei elektrischen Antrieben über den Motorstrom oder das Drehmoment. Auch kann die Aufdehnung des Pressengestells während des Pressvorgangs ermittelt werden. Es ist auch bekannt, die Presskräfte direkt im Kraftfluss über Dehnungsmessstreifen zu messen. Die herkömmlichen Messmethoden sind jedoch mit Nachteilen behaftet. Bei Einsatz eines einzelnen Drucksensors in der Pressachse ist es nicht möglich, eine ungleichmäßige Krafteinbringung zu ermitteln. Dementsprechend ist es auch nicht möglich, eine gewünschte ungleichmäßige Krafteinbringung kontrolliert zu erzeugen.

Bei indirekter Ermittlung der Kraft über Messgrößen aus den Antrieben, wie Druckverhältnissen oder Strömen, ist es zwar möglich, eine ungleichmäßige Krafteinbringung zu ermitteln bzw. zu erzeugen, sofern mehrere Antriebe auf eine Pressachse wirken. Die indirekte Kraftermittlung ist allerdings bei kleinen Kräften sehr ungenau, da externe Störgrößen, wie z.B. die Reibung im Zylinder, nicht herausgerechnet werden können.

Bei Einsatz von Kraftsensoren mit Dehnungsmessstreifen wird mit zunehmenden Messbereichen der benötigte Bauraum immer größer, da die Kraftsensoren immer größer werden.

Die Kraftmessung muss in der Lage sein, die maximal mögliche Kraft in der Presse zu ermitteln. Dabei ergeben sich messtechnisch bedingt bei der Messung kleinerer Kräfte, wie z.B. der Ausstoßkraft der Presslinge, große prozentuale Messfehler. Sollen in einem Presszyklus stark unterschiedliche Kraftwerte mit gleicher Genauigkeit gemessen werden, müssen mehrerer Sensoren eingebaut werden. Eine Messung mit nur einem Sensor mit Messbereichsumschaltung bringt nur eine geringe Verbesserung der Genauigkeit.

Durch die Größe bisher verwandter Kraftsensoren lässt sich platzbedingt meist nur ein einziger Sensor einbauen, mit dem eine ungleichmäßige Kraftanleitung nicht ermittelbar ist.

Der Erfindung liegt die Aufgabe zugrunde, eine Pulverpresse zu schaffen, bei der in platzsparender Weise eine hinreichend genaue Presskraftmessung über einen großen Messbereich durchgeführt werden kann. Insbesondere soll auf einfache Weise eine Schiefstellung eines Presswerkzeugs festgestellt werden.

Diese Aufgabe wird durch die Merkmale des Patentanspruchs 1 gelöst.

Bei der Erfindung wird im Kraftweg mindestens eines Linearantriebs zum oberen Presswerkzeug und/oder unteren Presswerkzeug und/oder zum Querwerkzeug ein Piezosensor geschaltet.

Die Verwendung eines Piezosensors im Kraftweg hat mehrere Vorteile. Zum einen baut ein Piezosensor sehr klein. Dadurch können mehrere in einer Pressachse eingebaut werden. Ein weiterer Vorteil ist der große Messbereich. Es können sehr genaue Messergebnisse auch bei kleineren Kräften erzielt werden, da die Messgenauigkeit von Piezokraftsensoren über den gesamten Messbereich annähernd konstant ist. Somit lassen sich in einem Presszyklus stark unterschiedliche Kräfte, wie die Hauptpresskraft und die Ausstoßkraft, mit gleicher Messgenauigkeit ermitteln.

Insbesondere um unterschiedliche Kräfte in einer Pressachse einleiten zu können, ist an sich bekannt, einer Pressachse mindestens zwei Antriebe zuzuordnen, die beabstandet auf den Werkzeugträger wirken. In diesem Zusammenhang sieht die Erfindung vor, dass die obere Pressachse und/oder die untere Pressachse mindestens zwei exzentrisch am oberen und/oder unteren Werkzeugträger angreifende Linearantriebe aufweist und im Kraftweg zwischen den oberen und/oder den unteren Linearantrieben und dem oberen und/oder unteren Presswerkzeug jeweils ein Piezosensor geschaltet ist. Durch den Einsatz mehrerer Piezosensoren je Pressachse wird es möglich, eine ungleichmäßige Krafteinbringung zu messen. Durch Überprüfung und Vergleich der ermittelten Kraftwerte je Pressachse wird die ungleichmäßige Krafteinbringung ermittelt. Dadurch ist es möglich, eine Schiefstellung des Presswerkzeugs festzustellen. Werden bei der Kraftermittlung unerwünschte Kräfte festgestellt, deutet dies auf eine Schiefstellung hin und eine Achsbewegung kann abgebrochen werden. Dies dient dem Schutz mechanischer Komponenten, wie dem Presswerkzeug, dem Presswerkzeugadapter, einer Antriebsspindel bzw. einer Antriebsstange eines Hydraulikzylinders.

Mit Hilfe von beabstandeten Piezosensoren kann eine Überwachung auf Schwergängigkeit erfolgen, wie z.B. in den Führungen. Entstehen beim Bewegen einer Pressachse unterschiedliche Kräfte oder verändern sich diese bei gleichem Bewegungsablauf über einen längeren Zeitraum, deutet dies auf eine Schwergängigkeit hin.

Durch Antreiben einer Pressachse mittels mehrerer Antriebe und Messung der Krafteinbringung an mehreren Stellen im Kraftfluss ist es auch möglich, bewusst eine ungleichmäßige Kraft einzubringen. Dies kann bei der Formung von unsymmetrischen Presslingen von Vorteil sein.

Bei der Erfindung wirken parallel beabstandete Linearantriebe gemeinsam auf ein z.B. horizontales Kraftübertragungsglied und das Kraftübertragungsglied wirkt über beabstandete Piezosensoren auf den Werkzeugträger. Vorzugsweise sind die Piezosensoren symmetrisch zur Hochachse der Presse angeordnet.

Bei zwei Piezosensoren sind diese nach einer Ausgestaltung der Erfindung symmetrisch und in einer diametralen Ebene, die durch die Hochachse der Presse geht, angeordnet.

Die verwendeten Linearantriebe können herkömmlich sein, etwa Hydraulikzylinder oder elektrische Antriebe mit Spindeltrieb. Für den letzteren Fall sieht eine Ausgestaltung der Erfindung vor, dass obere und/oder untere Linearantrieb einen Spindelantrieb aufweisen, dessen Spindel von einem Elektromotor angetrieben ist und dessen Spindelmutter am horizontalen Kraftübertragungselement angreift. Alternativ kann gemäß einer anderen Ausgestaltung der Erfindung die Spindelmutter eines Spindeltriebs von einem Elektromotor angetrieben sein, während die Gewindespindel am horizontalen Kraftübertragungsglied angreift.

Ein Ausführungsbeispiel wird nachfolgend anhand einer Zeichnung näher erläutert.

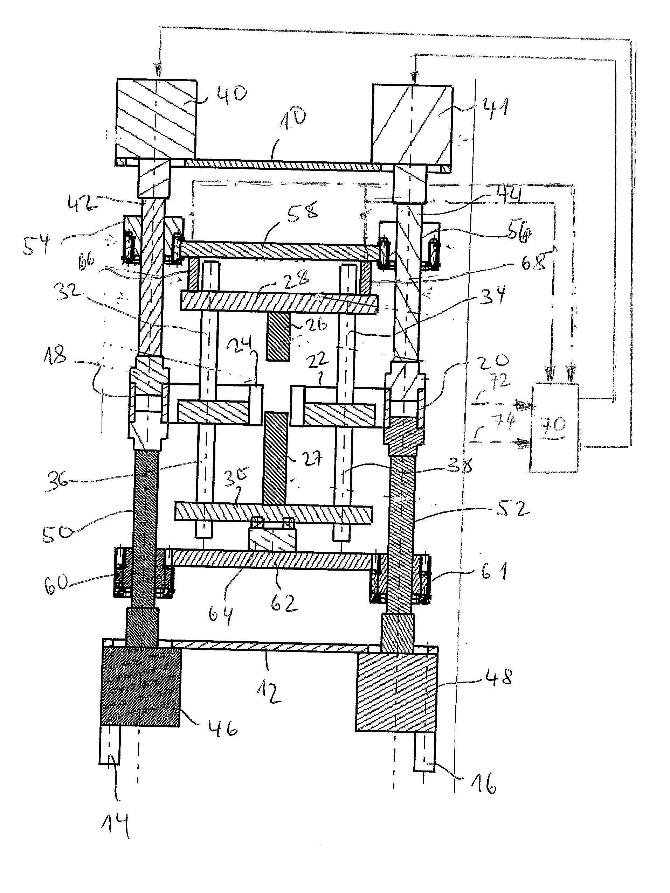

Die einzige Figur zeigt schematisch teilweise im Schnitt eine Pulverpresse nach der Erfindung.

Die in der Figur dargestellte Pulverpresse, z.B. für Metallpulver oder Keramikpulver, weist ein Gestell auf, das nur mit einzelnen Teilen dargestellt ist. Es weist eine obere Tragplatte 10 auf sowie eine untere Tragplatte 12, die sich über Füße 14, 16 auf einem Untergrund abstützt. Zum Gestell gehören auch zwei Lagerbauteile 18, 20, welche eine Matrizenplatte 22 halten. Die Matrizenplatte 22 nimmt eine Matrize 24 auf. Mit der Matrize 24 wirken ein oberer Pressstempel 26 und ein unterer Pressstempel 27 zusammen. Die Pressstempel 26, 27 sind an einer Trägerplatte 28 bzw. 30 angebracht. Die obere Trägerplatte 28 ist von zwei beabstandeten Führungsstangen 32, 34 geführt, und die untere Trägerplatte 30 von Führungsstangen 36, 38, die eine Gleitführung bewirken. Hierfür sind üblicherweise sogenannte Adapter vorgesehen, die hier nicht dargestellt sind.

Auf der oberen Tragplatte 10 sind beabstandet zwei Elektromotoren 40, 41 angebracht, welche eine Gewindespindel 42, 44 antreiben. Die Gewindespindeln 42, 44 sind in den Lagerbauteilen 18 bzw. 20 drehbar gelagert. An der unteren Tragplatte 12 sind zwei Elektromotoren 46, 48 angebracht, die Gewindespindeln 50 bzw. 52 antreiben. Die freien Enden der Gewindespindeln 50, 52 sind in den Lagerbauteilen 18 bzw. 20 drehbar gelagert gehalten.

Auf den Gewindespindeln 42, 44 sitzen Spindelmuttern 54, 56, zwischen denen sich eine Kraftübertragungsplatte 58 erstreckt, die mit den Spindelmuttern 54, 56 verbunden ist. Auf den Gewindespindeln 50, 52 sitzen Spindelmuttern 60, 61, zwischen denen eine Kraftübertragungsplatte 62 mit diesen verbunden ist. Die Kraftübertragungsplatte 62 wirkt über einen Block 64 auf die Trägerplatte 30. Die Kraftübertragungsplatte 58 wirkt über zwei beabstandete Piezosensoren 66, 68 auf die Werkzeugträgerplatte 28.

Es ist zu erkennen, dass auf die Werkzeugträgerplatte 28 bzw. Werkzeugträgerplatte 30 zwei parallel beabstandete Kraftwege einwirken. Somit ist es möglich, entweder durch gleichmäßigen Kraftangriff in beiden Kraftwegen eine gleichmäßige Kraft auf den Pressstempel 26 bzw. 27 auszuüben. Falls gewünscht, können auch unterschiedliche Kräfte zur Anwendung kommen. Mit Hilfe der parallel beabstandeten Piezosensoren 66, 68, die relativ weit außen an der Werkzeugträgerplatte 28 angreifen, lassen sich somit die auf den Stempel 26 ausgeübten Kräfte überwachen und steuern. Ungewollte unterschiedliche Kräfte, die zu einer Schiefstellung des Pressstempels 26 führen können, werden somit automatisch ermittelt. Andererseits kann eine unterschiedliche Kraftausübung auf den Stempel 26 erwünscht sein, um unterschiedliche Kräfte auf den Pressling auszuüben. Diese Kräfte können daher über die Piezosensoren 66, 68 gesteuert werden.

Piezosensoren haben einen sehr großen relativ genauen Messbereich. Es ist daher möglich, mit den Piezosensoren 66, 68 zum Beispiel die maximale Presskraft genau zu ermitteln. Es ist jedoch auch möglich, mit Piezosensoren die Ausstoßkraft zu ermitteln. In diesem Falle wären die Piezosensoren in Zusammenwirkung mit der unteren Werkzeugträgerplatte 30 und der Kraftübertragungsplatte 62 zu bringen. Schließlich ist auch möglich, die Matrizenplatte 22 mit Piezosensoren zusammenwirken zu lassen. Dies für den Fall, dass der untere Pressstempel 72 stationär ist und das Ausstoßen über die Höhenverstellung der Matrizenplatte 22 herbeizuführen.

Die Piezosensoren 66, 68 sind mit einer Regelvorrichtung 70 verbunden, wie durch strichpunktierte Linien angezeigt. Die Regelvorrichtung 70 ist außerdem mit den Elektromotoren 40, 41 verbunden. In der Vorrichtung 70 sind vorgegebene Sollwerte für die Kräfte gespeichert, die über die Piezosensoren 66, 68 auf die Werkzeugträgerplatte 28 ausgeübt werden sollen. Sind diese Kräfte unerwünscht nicht gleich, wird dies in der Regelvorrichtung 70 registriert und diese gibt ein Korrektursignal auf den entsprechenden Elektromotor 40 bzw. 41. Dadurch wird eine Schiefstellung sofort unterbunden. Es ist aber auch möglich, eine gewollte unsymmetrische Kraft auf die Werkzeugträgerplatte 28 aufzubringen, beispielsweise bei der Herstellung von unsymmetrischen Formlingen. Mit Hilfe der gezeigten Vorrichtung ist es in jedem Falle möglich, die Kraft, die von den Elektromotoren 40, 41 über die entsprechenden Spindeltriebe auf die Werkzeugträgerplatte 28 ausgeübt werden soll, genau zu kontrollieren.

Es versteht sich, dass eine entsprechende Steuerung oder Regelung auch für die unteren Elektromotoren 46, 48 vorgenommen werden kann, was hier jedoch nicht gezeigt ist.

Den Linearantrieben, wie sie in der Figur angedeutet sind oder auch der Werkzeugträgerplatte 28 bzw. 30 kann auch eine Weg-Mess-Vorrichtung zugeordnet sein, die hier nicht gezeigt ist. Es ist lediglich bei den gestrichelt gezeichneten Pfeilen 72, 74 angedeutet, dass hierüber Weg-Mess-Signale in die Regelvorrichtung 70 gegeben werden. Die Berücksichtigung von Weg-Mess-Signalen bei der Steuerung oder Regelung einer derartigen Presse ist an sich bekannt. Sie kann zusätzlich zu der beschriebenen Kraftregelung herangezogen werden.

Der in der Figur dargestellte Spindeltrieb kann auch derart ausgebildet sein, dass die Spindelmutter mit einem Elektromotor gekoppelt ist und in Drehung versetzt wird, während sie axial unbeweglich ist. Dadurch wird die Spindelstange vor- oder zurückbewegt und kann auf das Kraftübertragungsglied 58 bzw. 62 einwirken, um Ober- und/oder Unterstempel zu betätigen.

Die Piezosensoren 66, 68 bauen sehr klein und können daher an den gewünschten Stellen mit geringem Bauraum eingebaut werden.

## Patentansprüche

1. Pulverpresse mit einer Matrizenplatte, die mindestens eine Matrize trägt, mindestens einem oberen Presswerkzeug an einem oberen Werkzeugträger, mindestens einem unteren Presswerkzeug an einem unteren Werkzeugträger, mindestens einem oberen Linearantrieb für eine obere Pressachse, der auf den oberen Werkzeugträger wirkt, mindestens einem unteren Linearantrieb für die untere Pressachse, der auf einen unteren Werkzeugträger oder auf die Matrizenplatte wirkt, ggf. einen weiteren Linearantrieb für eine Querachse und einer Kraftmesseinrichtung, die Messkräfte zumindest an der oberen und/oder unteren Pressachse und/oder an der Querachse misst, **dadurch gekennzeichnet, dass** die obere Pressachse und/oder die untere Pressachse mindestens zwei exzentrisch am oberen und/oder unteren Werkzeugträger (28, 30) angreifende Linearantriebe (40, 42, 54) bzw. (41, 44, 46) bzw. (46, 50, 60) bzw. (48, 52, 61) aufweist, die parallel beabstandete Linearantriebe gemeinsam auf ein Kraftübertragungsglied (58) wirken und das Kraftübertragungsglied über beabstandete Piezosensoren (66, 68) auf den Werkzeugträger (28) wirkt.

2. Pulverpresse nach Anspruch 1, **dadurch gekennzeichnet, dass** die Piezosensoren (66, 68) symmetrisch zur Hochachse der Presse angeordnet sind.

3. Pulverpresse nach Anspruch 1, **dadurch gekennzeichnet, dass** zwei Piezosensoren symmetrisch in einer diametralen Ebene, die durch die Hochachse der Presse verläuft, angeordnet sind.

4. Pulverpresse nach einem der Ansprüche 1 bis 3, **dadurch gekennzeichnet, dass** obere und/oder untere Linearantriebe einen Spindeltrieb (42, 54; 44, 56) aufweisen, dessen Spindel (42, 44) von einem Elektromotor (40, 41) angetrieben ist und dessen Spindelmutter (54, 56) am horizontalen Kraftübertragungsglied (58) angreift.

5. Pulverpresse nach einem der Ansprüche 1 bis 4, **dadurch gekennzeichnet, dass** obere und/oder untere Linearantriebe einen Spindelantrieb aufweisen, deren Spindelmutter von einem Elektromotor angetrieben ist und deren Spindel am horizontalen Kraftübertragungsglied angreift.

6. Pulverpresse nach einem der Ansprüche 1 bis 5, **dadurch gekennzeichnet, dass** das Kraftübertragungsglied (58, 62) einen Balken oder eine Platte aufweist.

7. Pulverpresse nach einem der Ansprüche 1 bis 6, **dadurch gekennzeichnet, dass** der Werkzeugträger (28, 30) einen Balken oder eine Platte aufweist.

8. Pulverpresse nach einem der Ansprüche 1 bis 7, **dadurch gekennzeichnet, dass** eine Steuer- oder Regelvorrichtung (70) vorgesehen ist, die mit den Piezosensoren (66, 68) verbunden ist, die Sensorsignale mit in der Vorrichtung (70) gespeicherten vorgegebenen Kraftsollwerten verglichen werden und die Vorrichtung (70) bei einer Abweichung der Signale von den Sollwerten entsprechende Korrektur-Verstellsignale auf die Linearantriebe (40, 41, 46, 48) gibt.

9. Pulverpresse nach einem der Ansprüche 1 bis 8, **dadurch gekennzeichnet, dass** den Linearantrieben (40, 41, 46, 48) oder dem oberen und/oder unteren Werkzeugträger (28, 30) eine Weg-Mess-Vorrichtung zugeordnet ist.

10. Pulverpresse nach Anspruch 8 oder 9, **dadurch gekennzeichnet, dass** die Weg-Mess-Vorrichtung mit der Steuer- oder Regelvorrichtung (70) verbunden ist.

11. Pulverpresse nach Anspruch 9 oder 10, **dadurch gekennzeichnet, dass** die Weg-Mess-Vorrichtung die Wege beider Linearantriebe (40, 41 bzw. 46, 48) für die obere und/oder untere Pressachse misst.
